# EUROPEAN PATENT SPECIFICATION

(11) **EP 3 482 169 B1**
(45) Date of publication and mention of the grant of the patent: **19.08.2020**
(21) Application number: 16747612.6
(22) Date of filing: 05.07.2016
(51) Int. Cl.: G01F 11/26

(54) **A CONTAINER CLOSURE FOR POWDERED MATERIAL WITH IMPROVED SEALING OF ITS MEASURING CHAMBER**
BEHÄLTERVERSCHLUSS FÜR PULVERFÖRMIGES MATERIAL MIT VERBESSERTER ABDICHTUNG SEINER MESSKAMMER
FERMETURE DE RÉCIPIENT POUR MATÉRIAU EN POUDRE DONT L'ÉTANCHÉITÉ DE LA CHAMBRE DE MESURE EST AMÉLIORÉE

(43) Date of publication of application: 15.05.2019
(73) Proprietor: Tehnopro d.o.o., 10000 Zagreb (HR)
(72) Inventor: CINZEK, Mihael, HR-10000 Zagreb (HR)
(74) Representative: Bihar, Zeljko
(86) International application number: PCT/HR2016/000019
(87) International publication number: WO 2018/007840

(56) References cited:
- WO-A1-97/18156
- US-A- 5 370 284

## Description

### Technical Field

The invention discloses a container closure for powdered material which is equipped with a measuring chamber that allows the constant volume of powdered material to be discharged from the container. Said invention belongs to the class of solutions where measuring chamber is filled with the material at first by inverting the container and then material can be discharged via the orifice opened on said closure.

In general, the technical field of said invention can be described as closures with filling and discharging, or with discharging only devices; having built-in measuring chamber.

### Technical Problem

The packaging industry is one of the most developed industries. The growth of the global packaging industry is being driven by a number of trends. The development of retail chains and the burgeoning healthcare and cosmetics sectors are driving packaging demand worldwide. An increase in living standards and personal disposable income in the developed regions fuels consumption across a broad range of products, with subsequent growth of demand for the packaging for these goods. Finally, most of the products are being sold mainly due to their convenient packaging and use having in mind that low quality products are thing of the past for the developed markets.

Powdered materials are commonly used for making drinks; where said highly hygroscopic powdered material is mixed with a water in relatively constant amounts, usually measured by the users in spoons. Also, spice industry is mainly dealing with powdered materials measured by the consumer during the food preparation. In each of the mentioned processes it is essential for the user to be capable of measuring predetermined quantities of the powdered material with consistency.

Many container closures for powdered material, disclosed later in the previous art, are capable of measuring desired amount of powdered material with consistency. However, the sealing of the mentioned closures is rather poor. Poor closure sealing enables environmental humidity to deteriorate powdered substances stored in the containers. Also, poor closure sealing enables the powdered substance to leak around the closure during the measuring and discharging process.

The first technical problem solved with the present invention is improved sealing of its measuring chamber in operation, i.e. during measuring and discharging. Also, said improved sealing should be as good as any sealing in other common closure systems for hygroscopic powdered material while the container is not in use.

Second technical problem solved with the present invention is to form a closure which is easy to manufacture from elastomeric and/or plastic materials via standard inexpensive moulding technology; with physical dimensions that are acceptable for the user, which can be aesthetically combined with rigid or semi-rigid containers. Also, the closure has to be simple and intuitive to operate.

### Previous State of Art

Previous state of art regarding the disclosed invention is rather rich and only few solutions, presented by corresponding patent documents, are cited below.

Document US 2,837,250, with the title of invention: "Measuring and dispensing attachment"; inventor I. Hagman; teaches about the container closure having measuring chamber that is filled by inverting the container. After being filled-up, the measuring chamber is manually opened by pressing the release mechanism that opens an orifice for discharge. The invention is oriented to the technical idea only, the entire closure is huge in comparison with the container and cannot be manufactured only by simple moulding process. Assembly requires also the metal parts, such as leaf spring, for proper functioning of the closure.

Document US 3,985,274 with the title of invention: "Dispenser-cover for containers filled with granular or powdered material"; inventors H. Lubalin et al.; teaches about the container closure having measuring chamber. The measuring chamber is formed in aesthetically pleased manner and inside a thin closure formed on the cylindrical side wall. The measuring chamber is easy to operate but has a high risk of leaking and is insecure in its closed position.

Document DE 3435653 with the title of invention: "Closure lid"; inventors G. Pohlmann et al.; teaches about the container closure having measuring chamber that is activated by applying the pressure on a part of closure. The measuring chamber is filled by inverting the said container. Disclosed construction is good for granular product but highly ineffective in containing stored powdered material during discharge of measured quantity.

Document US 5,894,965 with the title of invention: "Measuring dispensing cap with spring biased flip top"; inventors E. S. Robbins III. et al.; teaches about another solution regarding the container closure having measuring chamber that is activated by applying the pressure on a part of closure. Said solution has a pivotable flip top switchable between close and open positions. Flip top is mounted for pivotal motion about a horizontal hinge axis wherein the hinge axis separates a closure panel of the flip top from a push panel of the flip top. The functioning of said solution is identical to this used by the cited invention. However, the sealing is rather questionable if used for powdered material.

Document US 6,805,265 with the title of invention: "Measuring dispensing top for an aquarium fish food container"; inventors S. R. Goldman et al.; teaches about somewhat complicated solution for filling and discharging of the measuring chamber situated in the container closure. This solution can be suitable for powdered material but is entirely impractical for frequent and quick use, for instance in a kitchen.

Document US 8,028,865 with the title of invention: "Two-way dispenser cap with metered and unmetered selection"; inventor S. W. DeJonge; teaches about yet another solution regarding the container closure having measuring chamber that is activated by applying the pressure on a part of closure. However, this solution offers the user to choose between metered and unmetered way of dispensing the material situated within the container. The solution, as described, seems to be adequate for the granulated material. However, it seems that the sealing is rather poor to be used with fine powdered material.

Document WO 9718156 with the title of invention: "Measuring cap with pivoting dispenser"; inventors E. S. Robbins III. et al.; represents the closest prior art. This document teaches about the container closure having measuring chamber that is filled by inverting the container and activated by applying the pressure on a part of said closure. Figures 19-22 disclose the same mode of operation as applied in the present invention. However, the difference between said prior art and the disclosed invention is in improved sealing of the measuring chamber that is formed in the disclosed invention.

To conclude, the difference between the disclosed invention and the prior art is in the sealing mechanism which enables powdered and highly hygroscopic material, such as powdered drinks or spices, to be effectively stored and dispensed via measuring chamber in the predetermined amount that corresponds to the volume of said measuring chamber.

### Summary of Invention

A container closure for powdered material with improved sealing of its measuring chamber is disclosed. Said measuring chamber is capable to deliver predetermined amount of a powdered material to the user. Said closure consists of a cap and pivotally movable top that is nested into said cap via pair of its side pins. Side pins are inserted into bores already formed in reinforced portions of the said cap.

The measuring chamber is formed by four walls: a front chamber wall connected with two side chamber walls, where said side chamber walls are connected with a rear chamber wall. The bottom chamber wall is situated in the way that connects both side chamber walls and front chamber wall. In that way an opening is formed between the bottom chamber wall and the rear chamber wall which allows passage of the powdered material.

The measuring chamber is enclosed by the top inner surface of the pivotally movable top, two front cap walls, two rear cap walls, a front cap tooth and a rear cap tooth. Pivotally movable top, in its closed position, is parallel with horizontal portion of the cap. The powdered material can now pass through the opening formed between the bottom chamber wall and front cap tooth filing up the measuring chamber, while rear cap tooth gets in the contact with the rear chamber wall sealing the connection between pivotally movable top and the cap.

Pivotally movable top, while in its open position, achieved by pressing the engaging portion towards the cap, opens the discharge orifice formed between front chamber wall and top inner surface. In the same time, the front cap tooth gets into contact with the bottom chamber wall resulting in sealing off the measuring chamber with powdered material situated in it from the powdered material situated in the rest of the cap.

The improved sealing of the measuring chamber is achieved in a way that:
- each side chamber wall is sandwiched between the rear cap wall from the inner side of the chamber and the front cap wall from the outer side of the measuring chamber, ensuring that powdered material stays within the measuring chamber without leakage, while pivotally movable top is in closed position; and
- when pivotally movable top is switched to open position, said sealing formed by the rear cap wall, side chamber wall and front cap wall allows powdered material to leave the measuring chamber through the discharge orifice only.

The cap, according to the invention, is formed from outer portion and inner portion connected together via an annular rim. Said annular rim is equipped with the stopper that enters beneath the rear edge of the pivotally movable top, fixing said pivotally movable top in the closed position. Also, said inner portion is further equipped with another stopper, situated close to the horizontal portion, where said stopper captures entire rear edge of the pivotally movable top, fixing said pivotally movable top in the open position.

The inner portion of said cap is equipped with the screw that allows to be screwed on the container which has identical diameter and the screw pitch fabricated on the pouring neck.

### Brief Description of Drawings

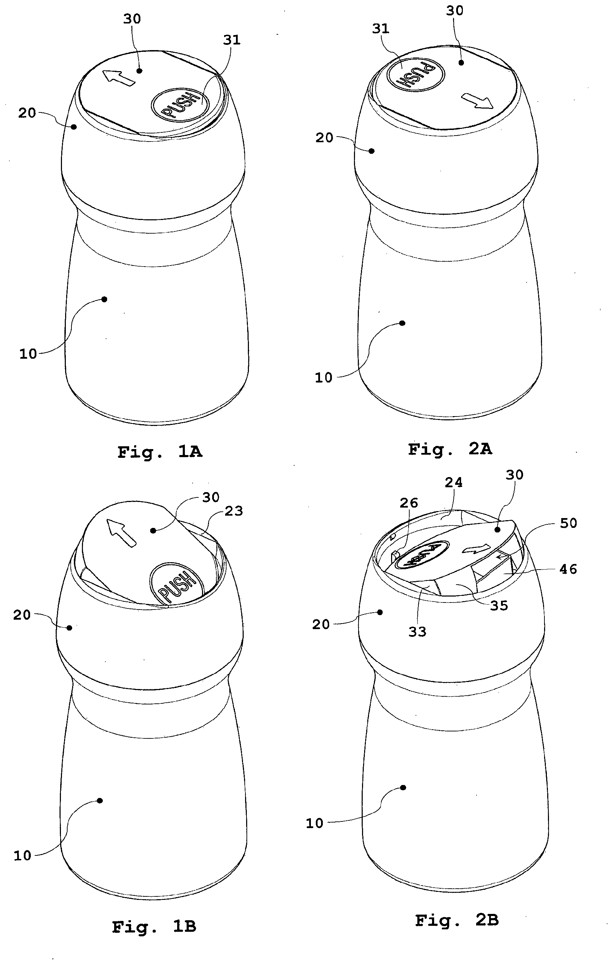

The present invention is depicted via following set of figures. Figs. 1A and 2A represent closed container closure from two different perspectives regarding the container closure orientation. Figs. 1B and 2B represent opened container closure from the same perspectives as previously depicted on Figs. 1A and 2A.

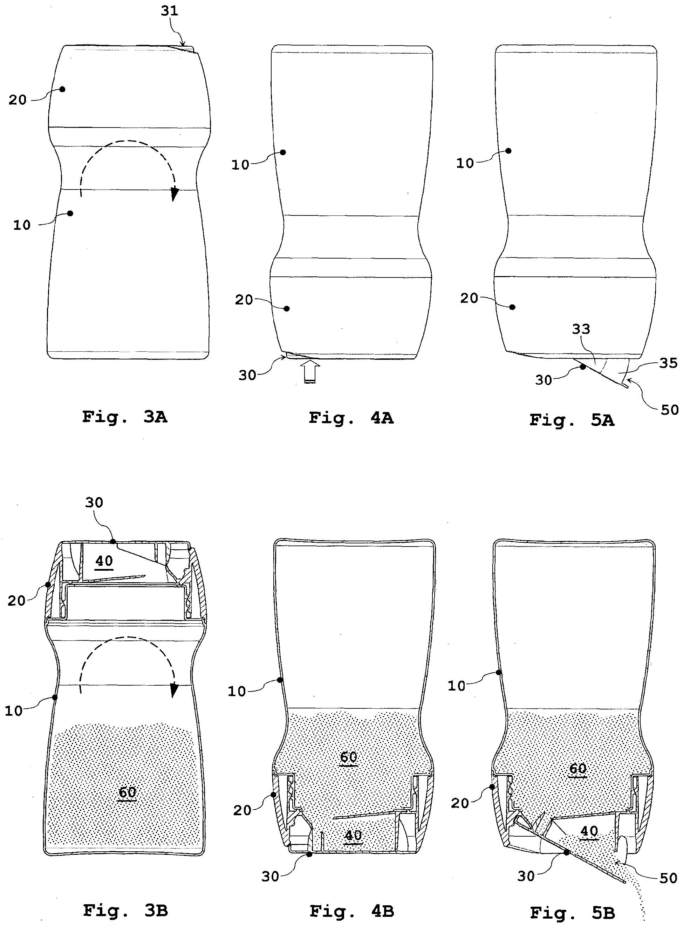

Figs. 3A, 4A and 5A show the actual use of a container closure for powdered material mounted on a suitable container. Figs 3B, 4B and 5B shows the identical situations already depicted on Figs. 3A, 4A and 5A with charted circulation of the powdered material within the container and its closure elements during the use.

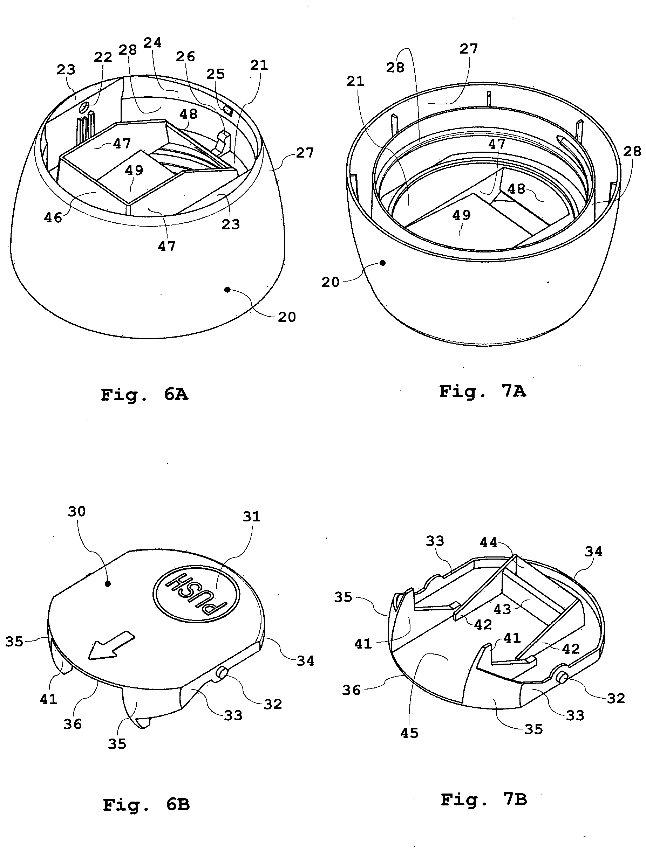

Fig. 6A shows the closure cap, Fig. 6B shows corresponding pivotally mounted top ready to be inserted into said cap. Figs. 7A and 7B show the same content as depicted on Figs. 7A, 7B but from the different perspective, from below. This two views depict the invention in all aspects.

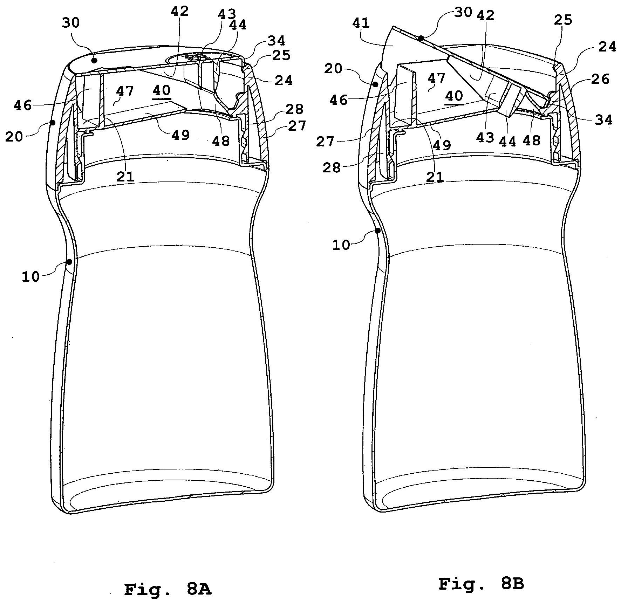

Fig. 8A shows the cross-section of container closure when the pivotally movable top is in closed position; said cross-section divides container closure into two mirror symmetrical halves. Fig. 8B shows the same cross-section of container closure when the pivotally movable top is in opened position.

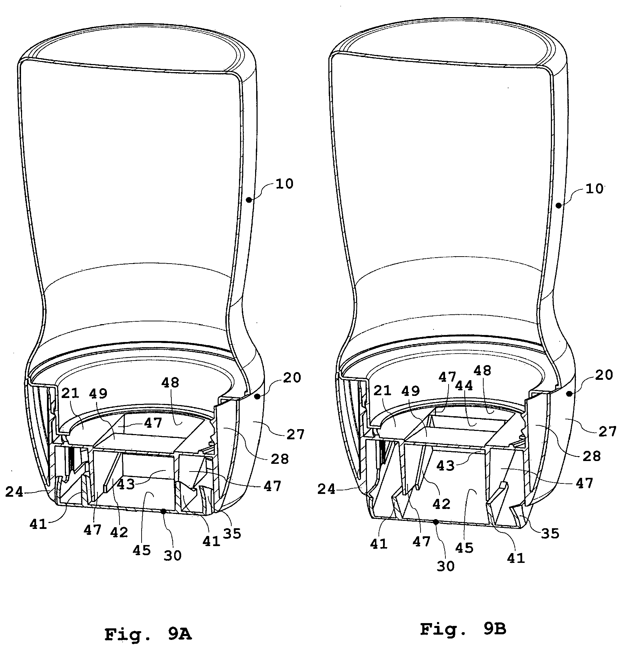

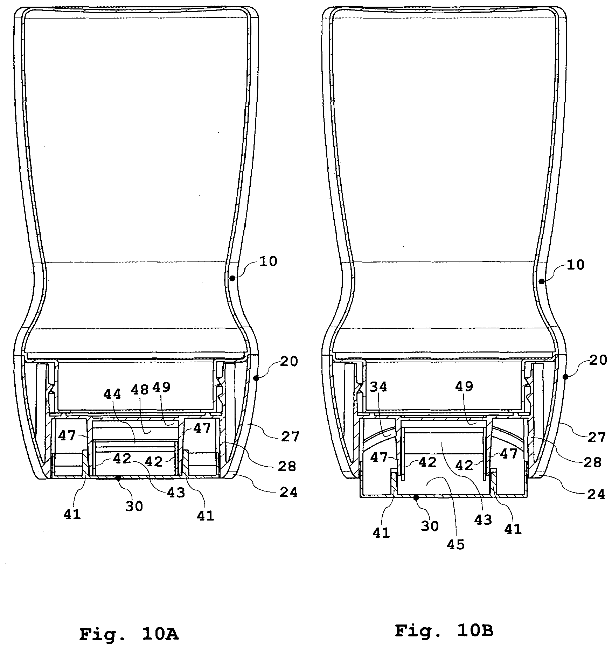

Fig. 9A shows the cross-section of container closure when the pivotally movable top is in closed position; said cross-section is obtained parallel to discharge orifice direction in order to show the interaction of closure cap and pivotally movable top that produces improved sealing. Fig. 9B shows the same cross-section of container closure when the pivotally movable top is in open position. Figs. 10A and 10B show the same cross-sections of container closure depicted on Figs. 9A and 9B; only the container with the container closure is rotated in the view where sealing between the cap and pivotally mounted top is best visible.

### Detailed Description

The focus of the present invention is to improve already known container closures for granular and especially for powdered material.

All aspects of the present invention will be discussed in details with the help of the above cited Figs. and corresponding references to the parts that enable the invention.

Figs. 1A and 2A represent closed container closure from two different perspectives; mounted on the container (10). Said container (10) can be any rigid or semi-rigid container that is available on the market; where corresponding container closure is mounted on it by any of method known in the art, preferably by screwing on it. In the latter case, it is clear that the screw pitches and the diameters of container (10) end and the corresponding closure cap (20) should be compatible and easily fitted together.

Container closure consists of the cap (20) and pivotally movable top (30) that is nested within the said cap (20). Said pivotally movable top (30) can be turned to its open position by pressing the engaging portion (31), marked as "push", downwards; i.e. towards the container bottom direction. Figs. 1B and 2B represent opened container closure from the same perspectives as previously depicted on Figs. 1A and 2A. Pushing the engaging portion (31) opens the discharge orifice (50) for discharging powdered material (60).

The main idea of the cap (20) design is to be in line with the corresponding container (10) of the powdered material (60). At a glance, the user can observe the pivotally movable top (30) while the cap (20) and container (10) looks as one integral body, i.e. unibody design. Such design of the pivotally movable top (30) leads the user to use container intuitively.

The main principles of operation of closure for powdered material (60) with measuring chamber (40) are depicted on Figs. 3A, 4A and 5A. Firstly, the container and closure should be inverted, i.e. rotated by approx. 180°, as indicated via arrow depicted on Fig. 3A. Then, the engaging portion (31) of the pivotally movable top (30) has to be pushed towards the container (10) bottom; as marked by the arrow on Fig. 4A. This action tilts the movable top (30) and opens the discharge orifice (50), see Figs. 5A, 5B.

The corresponding situation inside the container (10) and the cap (20) is presented via set of Figs. 3B, 4B and 5B. Firstly, the powdered material (60) is situated at the bottom of the container (10); the measuring chamber (40) is empty. Upon rotation, the powdered material (60) flows and fills the interior of the measuring chamber (40); Fig. 4B. The volume of the measuring chamber (40) defines the maximum quantity of a matter that can be discharged. Finally, when engaging portion (31) of the pivotally movable top (30) is pushed towards the container (10) bottom; inner construction of the pivotally movable top (30) seals the measuring chamber (40) from the container (10) interior which prevents further powdered material (60) from reaching said container (10) to fill the measuring chamber (40). In the same time, the discharging orifice (50) is formed between pivotally movable top (30) and the cap (20); Figs. 5B, 2B. Now, the powdered material (60) situated within the measuring chamber (40) is discharged due to the gravitational force. The process can be repeated as many times as wished by putting the container (10) in normal position and then by closing the pivotally movable top (30) in the position depicted on Figs. 3A, 3B with measuring chamber (40) free from the discharged powdered material (60). This procedure and method is very well known and cited in the prior art. However, the disclosed solution enables also consecutive discharging even without the further rotation of the container (10) in normal position; which is certainly an advantage over some solutions documented in the related art.

However, the principal functioning described in the prior art is not sufficient. Namely, the good container closure is distinguished from the poor container closure by its sealing capabilities between the cap (20) and the pivotally movable top (30). The prior art is mainly dealing with granular particles with diameters greater than 2 mm. Sealing of such granular material is technically not very demanding, the tolerances of the closure can be of the order of 0.3 mm in order for system to function properly.

On the other hand, the powdered material (60) has average particle size from 0.05 mm - 0.002 mm; that is the range from micro sand particles to macro clay particles, the good sealing between the movable parts may become problematic due to the particle leaking induced by the parts tolerances. In order to produce a good sealing between the cap (20) and the pivotally movable top (30) it is obvious that walls which define the measuring chamber (40) should be significantly redesigned to fulfil above technical demands.

The inner construction of the cap (20) is displayed on Figs. 6A and 7A. The cap (20) has its outer portion (27) oriented towards the user, and inner portion (28) equipped with the screw capable of receiving the corresponding container (10) screw. Portions (27, 28) are connected via annular rim (24); Figs. 6A, 8A. Said annular rim (24) has two reinforced portions (23), situated one opposed to another, where each reinforced portion (23) have a bore (22) for receiving the pin (32) formed on pivotally movable top (30) shown on Fig. 6B.

Inner portion (28) is reinforced by the horizontal portion (21) where the measuring chamber (40) is formed. The measuring chamber (40) is best visible on Fig. 6A; two side chamber walls (47) are connected to the front chamber wall (46) and to rear chamber wall (48) forming the rectangular structure. Bottom chamber wall (49) is connected to side chamber walls (47) and to the front wall chamber (46). Empty space between the bottom chamber wall (49) and the rear chamber wall (48) is designed for the intake of powdered material (60) into the said measuring chamber (40).

Two stoppers (25, 26) are formed on the cap (20) for securing pivotally movable top (30) in its open and closed position. Stopper (25) is formed on the annular rim (24) and its role is to fix the pivotally movable top (30) in the closed position. Stopper (26) is formed between the inner portion (28) and horizontal portion (21) and its role is to fix the pivotally movable top (30) in the opened position. Further stoppers (25, 26) roles will be discussed later.

The pivotally movable top (30) is displayed on Figs. 6B and 7B. Beside already mentioned engaging portion (31) there is a pair of pins (32) formed on side edges (33). Pins (32) can easily fit into bores (22) formed on cap (20) within reinforced portions (23). Also, the side edges (33) follow the reinforced potions (23) geometry and dimensions. Pins (32) enable the pivotally movable top (30) to pivot around them, once being nested within the cap (20) .

The pivotally movable top (30) has also rear edge (34), front edge (36) and two raised front edges (35) as depicted on Figs. 6B and 7B. Said edges (34, 35, 36) follow by their curvature and dimensions corresponding annular rim (24) formed on cap (20). Raised front edges (35) with side edges (33) contribute to the aesthetic appearance once the closure is open; as depicted on Figs. 1B and 2B.

The measuring chamber (40) is closed from the above, i.e. from the pivotally movable top (30) side that is carrying movable elements of the said measuring chamber (40). Two front cap walls (41) are connected with the corresponding front edges (36) and top inner surface (45); each front cap wall (41) is triangularly shaped with the wedge formed on its top. Two rear cap walls (42) are also triangularly shaped. Said rear cap walls (42) are situated parallel to said front cap walls (41), and connected mutually by two teeth; front cap tooth (43) and rear cap tooth (44) perpendicularly positioned to said walls (41, 42).

Engaging of the measuring chamber (40) movable parts formed on pivotally movable top (30) over the corresponding stationary parts formed on cap (20) will be explained in the paragraphs which follow. Cross-sections depicted on Figs. 8A and 8B show said parts in closed and opened position.

When the pivotally mounted top (30) is in closed position, Fig. 8A, the measuring chamber (40) is defined with side chamber walls (47), the rear chamber wall (48) and the bottom chamber wall (49); all being stiffened by the horizontal portion (21) of the cap (20). Rear cap tooth (44) is in the contact with rear chamber wall (48) preventing the powdered material (60) to leave the measuring chamber (40) during the filling process into the cavity behind the rear cap tooth (44) and above rear chamber wall (48).

Rear cap tooth (44) is designed in a manner to easily slide over said rear chamber wall (48) in the process of opening the pivotally mounted top (30), as shown on Fig. 8B. When this action is finished, rear chamber wall (48) is situated behind the rear cap tooth (44) and the front cap tooth (43) gets in contact with the bottom chamber wall (49) which prevents further filling of the measuring chamber (40) with the material situated in the container (10).

What differs disclosed invention from prior art solutions? This feature is only partially visible on Fig. 8B; all the time each stationary side chamber wall (47) is sandwiched between two movable walls; front cap wall (41) and the rear cap wall (42) that slides on side chamber wall (47) by its contact area. Even better this can be observed on the Figs. 9A and 9B where the cross-section is taken in the portion where triangularly shaped front cap walls (41) are deformed into wedges. On Fig. 9A the container and its closure is depicted in the moment before the discharge of the measuring chamber (40) occurred. Space for filling the powdered material (60) into measuring chamber (40), which is formed between rear chamber wall (48) and bottom chamber wall (49), is clearly visible. The side leaking of the powdered material (60) from the measuring chamber (40) is prevented via previously said fact that each stationary side chamber wall (47) is sandwiched by the rear cap wall (42) from inner side of the measuring chamber (40) and by the front cap wall (41) from the outer side of the measuring chamber (40). The pressure generated by the powdered material (60) in the moment of inverting the container (10) cannot propel the particles situated in the measuring chamber (40) to pass all three barriers, i.e. walls (41, 47, 42). The only possible week sealing point can be found in the contact of the front camber wall (46) with the top inner surface (45); Fig 8A, 8B. For that reason the stopper (25) is formed on the annular rim (24) and once pivotally mounted top (30) is in closed position; its top inner surface (45) is in good contact with the front chamber wall (46) edge thus preventing the powdered material (60) from leaving the measuring chamber in the discharging direction. Namely, said stopper (25) enters beneath the rear edge (34) and exerts the pressure on the opposite end of the pivotally mounted top (30) that is situated above the front chamber wall (46) formed in the cap (20).

The skilled person in the art will recognize that the phase when container (10) and its closure are inverted lasts for few seconds. The above improved sealing guarantees that the filling of the measuring chamber (40) and subsequent discharging is performed without side leaking of the material.

To avoid incomplete discharges, the stopper (26) locks the pivotally movable top (30), via its rear edge (34), in the opened position. Considering the fact that discharge phase induced due to the gravity field lasts approximately 1 second or less, the role of said stopper (26) is to prevent discharge phase to be suddenly interrupted, having in mind that locking and unlocking of the rear edge (34) from the stopper (26) takes a time, for the average user, longer than 1 second.

This solution with two stoppers has clear advantage over the prior art solutions where leaf spring or other elastic materials are used to lock and unlock discharge phase of the container.

Finally, Figs. 10A and 10B give the same cross-section view as depicted on Figs 9A and 9B, with difference in that both sandwiched side chamber walls (47) by the corresponding cap walls (41, 42) are displayed in closed and opened position.

One can conclude that this kind of sealing with sandwiched structure has significant advantages over the prior art solutions and prevents the side leaking of the powdered material (60). This improved sealing will be insufficient without proper front chamber wall (46) sealing with the top inner surface (45) that is partially executed via the stopper (25) that is formed on the annular rim (24).

Also, the above disclosed improved sealing is good enough to prevent humidity from entering into said container (10), which can deteriorate powdered substances stored in it.

Few words should be addressed to the manufacturing process of the cap (20) and pivotally movable top (30) depicted on the Figs. 6A, 6B, 7A, 7B. The cap (20) and the corresponding pivotally movable top (30) are designed to be easily formed by standard moulding process, with minimum number of cavities that can complicate said moulding process. The proper material for the parts can be any plastic material used for rigid or semi-rigid containers known in the art. Once being moulded; the pivotally movable top (30) is nested within the cap (20) by slight deformation of the annular rim (24) and the reinforced portion (23) that allows pins (32) to be inserted into bores (22). With this one action the assembly process is completed. That fact reduces the manpower used in the manufacturing process and reduces possible contamination of the said container closure, having in mind that the closure is to be used in food industry.

### Industrial Applicability

The industrial applicability of said invention is obvious; the invention discloses a new system for sealing of the measuring chamber (40) prior to use, during the measuring and during discharging phase within the container closure intended to be used for powdered material (60). In addition, said solution offers pleasant appearance and ability to be designed and assembled with the container as a unibody design. The measuring chamber (40) mechanism is entirely located within the cap (20) to minimise the cap (20) volume. Said solution is extremely user friendly and intuitive for use.

### References

- 10: - container
- 20: - cap
- 21: - horizontal portion
- 22: - bore
- 23: - reinforced portion
- 24: - annular rim
- 25: - stopper
- 26: - stopper
- 27: - outer portion
- 28: - inner portion
- 30: - pivotally movable top
- 31: - engaging portion
- 32: - pin
- 33: - side edge
- 34: - rear edge
- 35: - raised front edge
- 36: - front edge
- 40: - measuring chamber
- 41: - front cap wall
- 42: - rear cap wall
- 43: - front cap tooth
- 44: - rear cap tooth
- 44: - rear cap wall
- 45: - top inner surface
- 46: - front chamber wall
- 47: - side chamber wall
- 48: - rear chamber wall
- 49: - bottom camber wall
- 50: - discharge orifice
- 60: - powdered material

## Claims

1. A container closure for powdered material (60) with improved sealing of its measuring chamber (40) that is capable to deliver predetermined amount of a powdered material (60);
- where said closure consists of a cap (20) and pivotally movable top (30) that is nested within the said cap (20) via pair of side pins (32) which are inserted into bores (22) already formed in reinforced portions (23) of the said cap (20); **characterised in that**
- the measuring chamber (40) is formed by four walls: a front chamber wall (46) connected with two side chamber walls (47), said side chamber walls (47) are connected with a rear chamber wall (48) and situated at a horizontal portion (21) of the said cap (20); a bottom chamber wall (49) that is situated in the way that connects both side chamber walls (47) and front chamber wall (46), thus an opening is formed between the bottom chamber wall (49) and the rear chamber wall (48) to allow the passage of the powdered material (60); and
- the measuring chamber (40) is enclosed by the top inner surface (45) of the pivotally movable top (30) ; two front cap walls (41), two rear cap walls (42), a front cap tooth (43) and a rear cap tooth (44) are formed on the said inner surface (45) of the pivotally movable top (30);
- the pivotally movable top (30) in its closed position is parallel with the horizontal portion (21) of the cap (20) and the powdered material (60) can pass through the opening formed between the bottom chamber wall (49) and front cap tooth (43) filing up the measuring chamber (40), while rear cap tooth (44) gets in contact with the rear chamber wall (48) sealing the connection between pivotally movable top (30) and the cap (20);
- the pivotally movable top (30) while in its open position, achieved by pressing an engaging portion (31) towards the cap (20), opens the discharge orifice (50) formed between front chamber wall (46) and top inner surface (45), while the front cap tooth (43) gets into contact with the bottom chamber wall (49) resulting in sealing off the measuring chamber (40) with powdered material (60) situated in it from the powdered material (60) situated in the rest of the cap (20);
and **in that** said improved sealing of the measuring chamber (40) is achieved in a way that:
- each side chamber wall (47) is sandwiched between one of the rear cap walls (42) from the inner side of the chamber (40) and one of the front cap walls (41) from the outer side of the measuring chamber (40), ensuring that powdered material (60) stays within the measuring chamber (40) without leakage, while pivotally movable top (30) is in closed position; and
- when pivotally movable top (30) is switched to its open position,
said sealing formed by the rear cap wall (42), side chamber wall (47) and front cap wall (41) allows powdered material (60) to leave the measuring chamber (40) through the discharge orifice (50) only.

2. A container closure for powdered material (60) with improved sealing of its measuring chamber (40) according to claim 1 where cap (20) is formed from outer portion (27) and inner portion (28) connected together via an annular rim (24), **characterized in that** said annular rim (24) is equipped with a stopper (25) that enters beneath the rear edge (34) of the pivotally movable top (30) fixing said pivotally movable top (30) in the closed position and exerting pressure on the top inner surface (45) to the front chamber wall (46) to improve the sealing.

3. A container closure for powdered material (60) with improved sealing of its measuring chamber (40) according to any of the previous claims, where cap (20) is formed from outer portion (27) and inner portion (28) connected together via annular rim (24), **characterized in that** said inner portion (28) is equipped with a stopper (26), situated close to the horizontal portion (21), where said stopper (26) captures the entire rear edge (34) of the pivotally movable top (30) fixing said pivotally movable top (30) in the open position.

4. A container closure for powdered material (60) with improved sealing of its measuring chamber (40) according to any of the claims 2-3, **characterized in that** said inner portion (28) of the cap (20) is equipped with a screw that allows to be screwed on the container which has identical diameter and the screw pitch fabricated on the pouring neck.

## Patentansprüche

1. Behälterverschluss für pulverförmiges Material (60) mit verbesserter Abdichtung seiner Messkammer (40), die in der Lage ist, vorher festgelegte Mengen eines pulverförmigen Materials (60) abzugeben;
- wobei der Verschluss aus einer Kappe (20) und einem schwenkbar beweglichen Oberteil (30) besteht, das mittels eines Paars von Seitenstiften (32), die in Bohrungen (22), die bereits in verstärkten Abschnitten (23) der Kappe (20) gebildet sind, eingesetzt sind, innerhalb der Kappe (20) verschachtelt ist; **dadurch gekennzeichnet, dass**
- die Messkammer (40) durch vier Wände gebildet ist: eine vorderseitige Kammerwand (46), verbunden mit zwei seitlichen Kammerwänden (47), wobei die seitlichen Kammerwände (47) mit einer rückseitigen Kammerwand (48) verbunden sind und sich an einem horizontalen Abschnitt (21)
der Kappe (20) befinden; eine untere Kammerwand (49), die sich in dem Weg befindet, der beide seitlichen Kammerwände (47) und die vorderseitige Kammerwand (46) verbindet, wodurch eine Öffnung zwischen der unteren Kammerwand (49) und der rückseitigen Kammerwand (48) gebildet wird, um den Durchgang des pulverförmigen Materials (60) zu erlauben; und
- die Messkammer (40) durch die obere Innenoberfläche (45) des schwenkbar beweglichen Oberteils (30) abgeschlossen ist; zwei vorderseitige Kappenwände (41), zwei rückseitige Kappenwände (42), eine vorderseitige Kappenzacke (43) und eine rückseitige Kappenzacke (44) auf der Innenoberfläche (45) des schwenkbar beweglichen Oberteils (30) gebildet sind;
- das schwenkbar bewegliche Oberteil (30) in seiner geschlossenen Position parallel zu dem horizontalen Abschnitt (21) der Kappe (20) ist und das pulverförmige Material (60) unter Auffüllen der Messkammer (40) durch die zwischen der unteren Kammerwand (49) und der vorderseitigen Kappenzacke (43) gebildete Öffnung laufen kann, während die rückseitige Kappenzacke (44), die Verbindung zwischen der schwenkbar beweglichen Oberseite (30) und der Kappe (20) abdichtend, in Kontakt mit der rückseitigen Kammerwand (48) kommt;
- das schwenkbar bewegliche Oberteil (30), während in seiner offenen Position, erreicht durch Drücken eines eingreifenden Abschnitts (31) in Richtung der Kappe (20), das zwischen vorderseitiger Kammerwand (46) und oberer Innenoberfläche (45) gebildete Auslassloch (50) öffnet, während die vorderseitige Kappenzacke (43) in Kontakt mit der unteren Kammerwand (49) kommt, resultierend im Abdichten der Messkammer (40) mit darin befindlichem pulverförmigem Material (60) von dem im Rest der Kappe (20) befindlichen pulverförmigen Material (60);
und dadurch, dass die verbesserte Abdichtung der Messkammer (40) derart erreicht wird, dass:
- jede seitliche Kammerwand (47) zwischen einer der rückseitigen Kappenwände (42) von der Innenseite der Kammer (40) und einer von den vorderseitigen Kappenwänden (41) von der Außenseite der Messkammer (40) beidseitig umgeben ist, was sicherstellt, dass pulverförmiges Material (60) ohne Leckage innerhalb der Messkammer (40) bleibt, während das schwenkbar bewegliche Oberteil (30) in geschlossener Position ist; und
- wenn das schwenkbar bewegliche Oberteil (30) in seine offene Position umgestellt wird,
die durch die rückseitige Kappenwand (42), seitliche Kammerwand (47) und vorderseitige Kappenwand (41) gebildete Abdichtung pulverförmigem Material (60) erlaubt, die Messkammer (40) ausschließlich durch das Auslassloch (50) zu verlassen.

2. Behälterverschluss für pulverförmiges Material (60) mit verbesserter Abdichtung seiner Messkammer (40) nach Anspruch 1, wobei die Kappe (20) aus mittels einer ringförmigen Fassung miteinander verbundenem Außenabschnitt (27) und Innenabschnitt (28) gebildet ist, **dadurch gekennzeichnet, dass** die ringförmige Fassung (24) mit Sperre (25) ausgestattet ist, die unterhalb der rückseitigen Kante (34) des schwenkbar beweglichen Oberteils (30) eintritt, das schwenkbar bewegliche Oberteil (30) in der geschlossenen Position fixiert und Druck auf die obere Innenoberfläche (45) zu der vorderseitigen Kammerwand (46) ausübt, um die Abdichtung zu verbessern.

3. Behälterverschluss für pulverförmiges Material (60) mit verbesserter Abdichtung seiner Messkammer (40) nach einem der vorstehenden Ansprüche, wobei die Kappe (20) aus mittels ringförmiger Fassung (24) miteinander verbundenem Außenabschnitt (27) und Innenabschnitt (28) gebildet ist, **dadurch gekennzeichnet, dass** der Innenabschnitt (28) mit Sperre (26) ausgestattet ist, die sich nahe an dem horizontalen Abschnitt (21) befindet, wobei die Sperre (26) die gesamte rückseitige Kante (34) des schwenkbar beweglichen Oberteils (30), das schwenkbar bewegliche Oberteil (30) in der offenen Position fixierend, erfasst.

4. Behälterverschluss für pulverförmiges Material (60) mit verbesserter Abdichtung seiner Messkammer (40) nach einem der Ansprüche 2-3, **dadurch gekennzeichnet, dass** der Innenabschnitt (28) der Kappe (20) mit einer Schraube ausgestattet ist, die erlaubt, auf den Behälter, der identischen Durchmesser aufweist, und die Gewindesteigung, die auf dem Ausgussstutzen hergestellt ist, geschraubt zu werden.

## Revendications

1. Fermeture de récipient pour matériau en poudre (60) avec étanchéité améliorée de sa chambre de mesure (40) qui est capable de fournir une quantité prédéterminée de matériau en poudre (60) ;
- où ladite fermeture consiste en un couvercle (20) et une face supérieure pivotable (30) qui est emboîtée dans ledit couvercle (20) via une paire de broches latérales (32) qui sont insérées dans des alésages (22) déjà formés dans des parties renforcées (23) dudit couvercle (20) ; **caractérisée en ce que**
- la chambre de mesure (40) est formée par quatre parois : une paroi de chambre frontale (46) connectée à deux parois de chambre latérales (47), lesdites parois de chambre latérales (47) sont connectées à une paroi de chambre arrière (48) et situées sur une partie horizontale (21) dudit couvercle (20) ; une paroi de chambre de fond (49) qui est située sur le chemin qui connecte les deux parois de chambre latérales (47) et la paroi de chambre frontale (46), une ouverture est par conséquent formée entre la paroi de chambre de fond (49) et la paroi de chambre arrière (48) pour permettre le passage du matériau en poudre (60) ; et
- la chambre de mesure (40) est enfermée par la surface interne supérieure (45) de la face supérieure pivotable (30) ; deux parois de couvercle frontales (41), deux parois de couvercle arrière (42), une dent de couvercle frontale (43) et une dent de couvercle arrière (44) sont formées sur ladite surface interne (45) de la face supérieure pivotable (30) ;
- la face supérieure pivotable (30), dans sa position fermée, est parallèle à la partie horizontale (21) du couvercle (20) et le matériau en poudre (60) peut passer à travers l'ouverture formée entre la paroi de chambre de fond (49) et la dent de couvercle frontale (43) en remplissant la chambre de mesure (40), tandis qu'une dent de couvercle arrière (44) entre en contact avec la paroi de chambre arrière (48) rendant étanche la connexion entre la face supérieure pivotable (30) et le couvercle (20) ;
- la face supérieure pivotable (30), lorsqu'elle est dans sa position ouverte, réalisée en pressant une partie d'engagement (31) vers le couvercle (20), ouvre l'orifice de décharge (50) formé entre la paroi de chambre frontale (46) et la surface interne supérieure (45), tandis que la dent de couvercle frontale (43) entre en contact avec la paroi de chambre de fond (49) avec pour résultat un isolement de la chambre de mesure (40) avec du matériau en poudre (60) se trouvant en elle par rapport à du matériau en poudre (60) se trouvant dans le reste du couvercle (20) ; et **en ce que** ladite étanchéité améliorée de la chambre de mesure (40) est réalisée d'une façon telle que :
- chaque paroi de chambre latérale (47) est prise en sandwich entre une des parois de couvercle arrière (42) provenant du côté intérieur de la chambre (40) et une des parois de couvercle frontales (41) provenant du côté extérieur de la chambre de mesure (40), garantissant que du matériau en poudre (60) reste à l'intérieur de la chambre de mesure (40) sans fuite, tandis que la face supérieure pivotable (30) est dans une position fermée ; et
- lorsque la face supérieure pivotable (30) est basculée dans sa position ouverte, ladite étanchéité formée par la paroi de couvercle arrière (42), la paroi de chambre latérale (47) et la paroi de couvercle frontale (41) permet au matériau en poudre (60) de quitter la chambre de mesure (40) uniquement à travers l'orifice de décharge (50).

2. Fermeture de récipient pour matériau en poudre (60) avec étanchéité améliorée de sa chambre de mesure (40) selon la revendication 1, où le couvercle (20) est formé à partir d'une partie extérieure (27) et d'une partie intérieure (28) connectées ensemble via un bord annulaire (24), **caractérisée en ce que** ledit bord annulaire (24) est muni d'un arrêt (25) qui pénètre au-dessous du bord arrière (34) de la face supérieure pivotable (30), fixant ladite face supérieure pivotable (30) dans la position fermée et exerçant une pression sur la surface interne supérieure (45) en direction de la paroi de chambre frontale (46) pour améliorer l'étanchéité.

3. Fermeture de récipient pour matériau en poudre (60) avec étanchéité améliorée de sa chambre de mesure (40) selon l'une quelconque des revendications précédentes, où le couvercle (20) est formé à partir d'une partie extérieure (27) et d'une partie intérieure (28) connectées ensemble via un bord annulaire (24) **caractérisée en ce que** ladite partie intérieure (28) est munie d'un arrêt (26), situé près de la partie horizontale (21), où ledit arrêt (26) capture l'entièreté du bord arrière (34) de la face supérieure pivotable (30) fixant ladite face supérieure pivotable (30) dans la position ouverte.

4. Fermeture de récipient pour matériau en poudre (60) avec étanchéité améliorée de sa chambre de mesure (40) selon l'une quelconque des revendications 2-3, **caractérisée en ce que** ladite partie intérieure (28) du couvercle (20) est munie d'une vis qui peut être vissée sur le récipient qui a un diamètre identique et le pas de vis fabriqué sur le goulot verseur.
